# EUROPEAN PATENT APPLICATION

(11) **EP 1 115 212 A1**
(43) Date of publication of application: **11.07.2001**
(21) Application number: 99940764.6
(22) Date of filing: 19.05.1999
(51) Int. Cl.: H04B 1/08, G01S 1/04

(54) **PORTABLE RECEIVER-INDICATOR FOR SATELLITE RADIO-NAVIGATION SYSTEMS**

(71) Applicant: Samsung Electronics Co., Ltd., Suwon-city, Gyungki-do (KR)
(72) Inventor: ROG, Andrei Leonidovich, Moscow, 107143 (RU); BEDRIN, Igor Borisovich, St.Petersburg, 198255 (RU); IVANOV, Vladimir Nikolaevich, St.Petersburg, 195297 (RU); KORULIN, Vitaly Nikolaevich, St.Petersburg, 193232 (RU); MALASHIN, Viktor Ivanovich, St.Petersburg, 195273 (RU); NAGAEV, Farid Ibragimovich, St.Petersburg, 193232 (RU); POVERENNY, Denis Georgievich, St.Petersburg, 195297 (RU); SHEBSHAEVICH, Boris Valentinovich, St.Petersburg, 190121 (RU); SILIN, Mikhail Jurievich, Moscow, 105094 (RU); PISAREV, Sergei Borisovich, St.Petersburg, 198152 (RU); USTINOV, Igor Vladimirovich, St.Petersburg, 193015 (RU); SOLDATENKOV, Anatoly Nikolaevich, St.Petersburg, 191002 (RU)
(74) Representative: Neill, Alastair William
(86) International application number: RU9900167
(87) International publication number: WO0070775

(57) **Abstract**

Portable receiver-indicator of satellite radio navigational systems, which design provides for higher compactness, convenience of storage and use by means of optimum arrangement of the antenna and equipment within the special container allowing operation with a power supply from an external power source. The antenna is being fixed on the body of the receiver-indicator by a ball joint in such a manner that in the storage mode the cross-sectional antenna axis is parallel to a centerline of the body of the receiver-indicator, the centerline of the antenna is parallel to a cross-sectional axis of the body of the receiver-indicator, and, in the operational mode the cross-sectional antenna axes and the body of the receiver-indicator are placed in perpendicular directions. The container for accommodation of the receiver-indicator is made in the shape of a box, with the completely opened upper end part to enable easy access to the display and controls of the receiver-indicator, and the receiver-indicator and the container are supplied with elements ensuring an electrical connection of the receiver-indicator with a source of an external power supply. The container is supplied with a belt for carrying and holding in a hand, and also with a means for fastening in the cabin of a vehicle.

## Description

### Technical Fields

The invention relates to area of radio electronics and can be used at designing portable (pocket) receiver-indicators for satellite radio navigational systems (SRNS) GPS and GLONASS, intended for operation both in an autonomous mode, and in a mode of a power supply from an onboard source.

### Prior engineering art

The standard design of a portable SRNS receiver-indicator represents one or several radio-receiving circuits, connected by its input to antenna, and by an output - to indicators, transforming radio signal into convenient for reading form. In known designs of receiver-indicators the above-said elements are arranged within a body (box) in the form of a parallelepiped, with controls and means of indication located on a front panel of the body. The antenna is fastened to the body of the receiver-indicator, usually, in its upper part,. Among such portable receiver-indicators is known, for example, a design of a portable SRNS receiver-indicator, described in the journal "GPS World", June 1994, p.64, " Handheld Receiver " [1], in which the antenna located in a top of a body, is fixed on a lateral wall of a body with a capability of being turned around the axis of attachment, perpendicular to centerline of the body. In a receiver-indicator of this design the cross-sectional antenna axes and that of the body remain parallel irrespective of the antenna tuning, the centerlines of the body and antenna are parallel in a storage mode, whereas in an operating position they are at angle to each other. The said design allows, in an operating position, to dispose a body of the receiver-indicator at an angle to horizon for better convenience of operation with controls, and for the antenna - to be oriented vertically upwards for better reception.

Examples of similar design of portable are described in the lournal " GPS World ", June 1994, p.8, " MAGELLAN PROMARK V " [2] and in " GPS World SHOWCASE ", December 1992, p.36, " Five-channel PLGR ". [3]. In publication [2] the model "Magellan Promark V" manufactured by " Magellan Systems " (USA), is shown in a storage mode, and in publication [3] the GPS SRNS receiver-indicator (model "PLGR" manufactured by " Magellan Systems " (USA)) is shown in an operating mode.

The above design has found industrial implementation also in such known portable GPS SRNS receiver-indicators as " GPS 45 " manufactured by "GARMIN International " (USA) (see journal " GPS World ". January, 1995, p.52, 53, and also model "Magellan Meridian XL " and " Magellan NAV 5000 DLX " by " Magellan Systems " (USA), p.56-57) [4].

Deficiency of a design of a portable receiver-indicator with the upper lateral arrangement of the rotary antenna is the increase of width of the receiver-indicator on the value equal to cross-section of the antenna, that hampers miniaturization, and therefore restricts the area of use and storage of such receiver-indicator.

The most similar to the alleged invention is an industrially manufactured by "GARMIN International " (USA) a portable GPS SRNS receiver-indicator model " GPS 92 " described in the journal " GPS World ", February, 1999, p. 59, " Handheld Aviation Navigation " [5]. This portable receiver-indicator is chosen as the prototype.

It has a body, stretched in a longitudinal direction, made in the shape of a parallelepiped. Sideways on a body, in its upper part, the antenna is fixed which is capable of turning around the axis of attachment, perpendicular to the centerline of the body, in such a manner that in an operating position the centerline of the antenna is directed vertically upwards, and the centerline of the body is directed at an angle to horizon. On a front panel of the body of the receiver-indicator the controls and display are located. The GPS receiver-indicator has the built-in unit of rechargeable power elements ensuring a capability of an independent operation. The GPS receiver-indicator has the interface socket for data transmission and the socket for hooking up the external antenna in case of operation in a screened location, for example, in a car or onboard aircraft. The GPS receiver-indicator is supplied with the means ensuring a capability of a power supply from an onboard power source of an aircraft or other vehicle. Besides, the GPS receiver-indicator can be connected to an external antenna. The GPS receiver-indicator can be fixed , for example, onboard aircraft, with the help of a special bracket, which, as a rule, is an element of an internal design of a cabin of the pilot.

The operation outside of a vehicle (in an autonomous mode) is performed through the built-in antenna and from the own power source - rechargeable cells. The body of the GPS receiver-indicator thus can be placed in a position convenient for operation by the operator, for example, at an angle to horizon, whereas the antenna is directed vertically upwards, i.e. in a position, at which the most effective reception is to be expected.

Thus, for the GPS receiver-indicator chosen as the prototype, the positive feature is the capability of operation onboard a vehicle, in a described case - aircraft, and outside it. However, this GPS receiver-indicator is not equipped with means, which would allow to place it onboard a vehicle which was not equipped in advance with a said special bracket, and would provide a capability of its safe storage in a non-working mode.

### Disclosure of the invention

The claimed invention is directed at solving the problem of safe storage of receiver-indicator in a non-working mode in the container being a part of the design of the receiver-indicator, and, in expansion of conditions of use of the receiver-indicator in the operational mode, in particular, by providing its onboard accommodation in a vehicle which was not originally equipped with a special bracket; and, at the same time, to allow operation, outside a vehicle both within a container, and without it; in operation within the container - to provide operation of the receiver-indicator both with a power supply from own batteries, and from an external power source.

The solution of this problem allows to design a, universal in application and convenient for use, portable SRNS receiver-indicator, intended for a mass consumer.

The essence of the invention is as following: a portable receiver-indicator of satellite radio navigational systems, containing body stretched in a longitudinal direction and made in the shape of a parallelepiped, equipped with an antenna located at the top of the body, with controls and display located on a front panel, and the interface connector for data transmission also located on the body, and a connector for hooking up an external antenna, containing also a power source (a unit of rechargeable elements), located inside the body, is, in addition, equipped with a container for accommodation of the receiver-indicator, which permits safe storage of the receiver-indicator in a storage mode, and which also permits operation (in the operational mode within the container) using an external power supply from an independent power source by means of a built-in voltage adapter combined with the battery charger, whereas the storage mode is characterized by turn of a body of the receiver-indicator on 180° around its centerline in relation to a position occupied by the receiver-indicator during the operation within the container.

### The description of the drawings

Essence of the invention, and its capability of industrial application are illustrated on Figs. 1 to 4, where the claimed receiver-indicator is shown in one of possible versions of implementation into practice.

On Fig.1 the claimed receiver-indicator is shown without the container (general view). On Fig. 1 the following elements are indicated: 1 - body, 2 - hinge, 3 - connecting cable, 4 - quadrifils antenna, 5 - cross-sectional antenna axis, 6 - centerline of the body, 7 - centerline of the antenna, 8 - cross-sectional axis of the body, 9 - keypad, 10 - display, 11 - unit of rechargeable batteries, 12 - interface connector, 13 - high-frequency connector, 19 - jack of a power supply, 20 - pins of the jack, 21 - groove, 25 - additional groove.

On Fig.2 the container (general view) is shown. Its key elements are: 14 - container, 15 - compartment of the stabilizer unit, 16 - stabilizer unit, 17 - connector of hook up of an external power source, 18 - vacuum "sucker", 22 - socket of a power supply, 23 - mating jacks of a power supply, 24 - ledge, 26 - belt.

On Fig. 3 is shown the receiver-indicator in the container in an operating mode. Its key elements are: 4 - quadrifils antenna, 9 - keypad, 10 - display, 14 - container, 18 - vacuum "sucker".

On Fig.4 is shown the receiver-indicator in the container in a storage mode. Its key elements are: 1 - body, 4 - quadrifils antenna, 9 - keypad, 10 - display, 14 - container, 18 - vacuum "sucker".

### Preferable version of implementation

In recommended version of realization the antenna is made in the shape of a parallelepiped, its length does not exceed width of a body of the receiver-indicator, the antenna is fixed on the body of the receiver-indicator with a capability of being turned in such a manner that in a storage mode the cross-sectional antenna axis is parallel to a centerline of the body of the receiver-indicator, the centerline of the antenna is parallel to a cross-sectional axis of the body of the receiver-indicator, and in an operating mode the cross-sectional antenna axes and the body of the receiver-indicator are placed in perpendicular directions, the centerline of the antenna is directed vertically upwards, and centerline of the body - at an angle to horizon. The antenna is fixed on an upper surface of the body of the receiver-indicator with the help of a rotary device made as a spherical hinge, through which the internal interconnect cable is placed.

The container for accommodation of the receiver-indicator is made in a form of a box, with the completely opened upper end part, to enable the installation of the receiver-indicator in the container, and fractionally opened upper front part for enabling access to the display and controls in operation of the receiver-indicator in the container, in this case the voltage regulator of an external power supply, i. e. the charger of rechargeable batteries is located in a compartment placed in the bottom of the container, and is connected, electrically, to the connector for hook up to the external power source. The part of the body of the receiver-indicator, located in the container, is narrowed down in relation to the part of a body remaining outside of the container, whereas the cross-sectional sizes of the container do not exceed the dimensions of the cross-section of the body of the receiver-indicator, remaining outside of the container. The receiver-indicator and the container are supplied with elements ensuring the electrical connection of the receiver-indicator with a voltage regulator of an external power supply - by a charger of rechargeable batteries in operation of the receiver-indicator in the container, these elements are a two-pin plug of a power supply, which pins being submerged in a groove of the lower end part of the body of the receiver-indicator, and outstanding socket of a power supply with mating jacks located at the bottom of the container, ensuring interaction and electrical contact of the two-pin plug and the socket in operational mode of the receiver-indicator in the container, whereas the socket is electrically connected to the container to the appropriate terminals of a voltage regulator of an external power supply - charger of batteries. At the bottom of container the ledge in the form of a cylinder for accommodation of pins of the two-pin plug of a power supply of the receiver-indicator, and in a bottom of the body of the receiver-indicator a groove for accommodation of a socket of a power supply of the container is made thus permitting easy accommodation of the receiver-indicator in the container in the storage mode.

The container is supplied with a belt for carrying and holding in hand, and the means for fastening it in the cabin of a vehicle. As a means for fastening the container in the cabin of a vehicle a removable vacuum "sucker" with a ball joint is used.

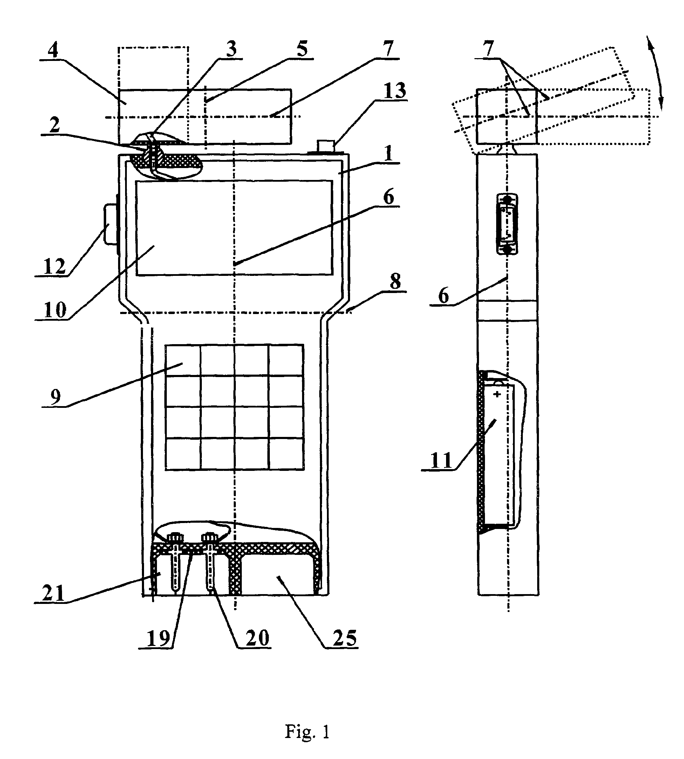

The test unit of a portable receiver-indicator of satellite radio navigational systems contains (Figs.1 to 4) a body 1, stretched in a longitudinal direction in the shape of a parallelepiped. On an edge of the top surface of the body 1 the rotary device executed as a spherical hinge 2 is located through which the internal interconnect cable 3 passes. On a hinge 2 the quadrifils antenna 4 having the shape of a parallelepiped is fixed. The length of the antenna 4 does not exceed the width of the body 1. The antenna 4 is fixed on the body 1 with a capability of being turned with the help of the rotary device (hinge 2) so, that in the storage mode the cross-sectional axis 5 of the antenna 4 is parallel to a centerline 6 of the body 1, and the centerline 7 of the antenna 4 is parallel to a cross-sectional axis 8 of the body 1 (Fig.1). In the storage mode the antenna 4 does not protrude outside the cross-sectional overall dimensions of the body 1, which feature offers additional convenience for storage.

The hinged antenna 4 fitting to the body 1 provides a capability of optimum arrangement of the body 1 and the antenna 4 in the operational mode of SRNS signal reception with the antenna 4. In an operating mode the centerline 7 of the antenna 4 is directed vertically upwards, a centerline 6 of the body 1 is directed at an angle to horizon, and cross-sectional axis 5 of the antenna 4 and cross-sectional axis 8 of the body 1 are placed in perpendicular directions. The position of the antenna 4 in relation to the body 1 in the operating mode of a signal reception by the antenna 4 is shown on Fig.1 by a dotted line.

To provide unobstructed rotation of the antenna 4 concerning the body 1 the interconnecting cable 3, passing through the spherical hinge 2 in a central pinhole, should be loosely placed in this pinhole. Also the cable 3 connecting the antenna 4 and the body 1 has a damping bending or loop (not shown in Figs).

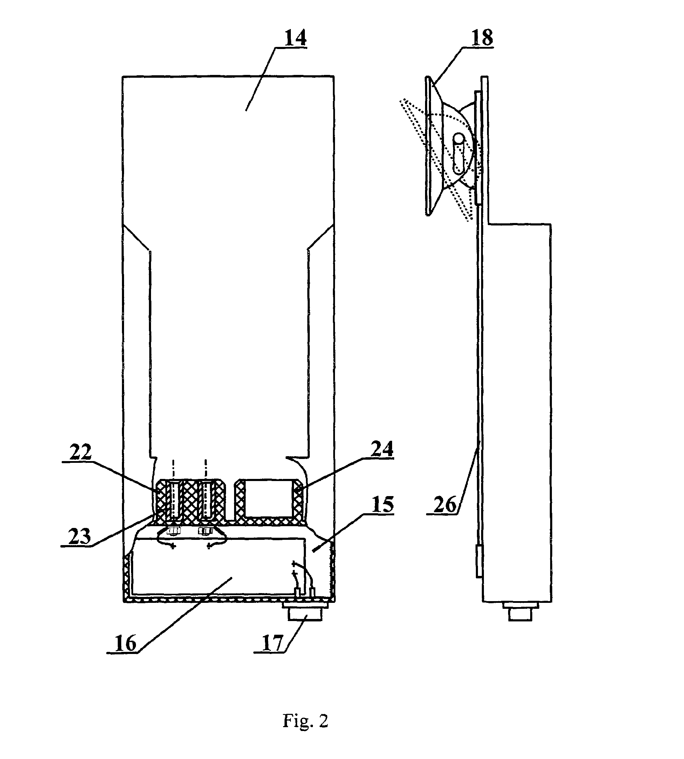

On a front panel of the body 1 the controls - keypad 9, and display 10, for example, liquid-crystal display, are located. In the body 1 the unit of accumulator batteries 11, the interface connector 12 for data transmission and the high-frequency connector 13 for hook up of the external antenna are built - in. Claimed receiver-indicator is supplied with the container 14 (Fig.2) for its accommodation.

The container 14 is made in the shape of a box, with the completely opened upper end part - for provision of the installation in the container 14 of the receiver-indicator, and fractionally opened upper front part - for providing access to the keypad 9 and display 10 in operating mode of the receiver-indicator within the container 14.

At the bottom of container 14 the compartment 15 for accommodation of the unit 16 representing a voltage regulator of an external power supply, i.e. a charger of rechargeable batteries 11, is located.

The container 14 is supplied with the connector 17 for hook up to the external power source, and also means for fastening in the cabin of a vehicle.

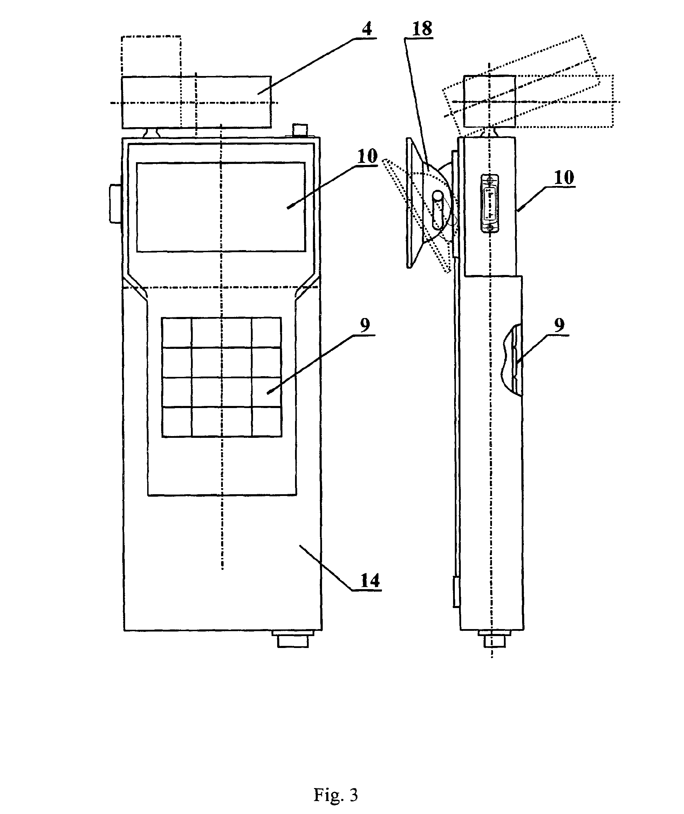

On Figs.2 and 3, the removable vacuum "sucker" 18 with a ball joint allowing to execute rotation of the container 14 concerning installation sites is shown as an example of a means for fastening the container in the cabin of a vehicle, (on Fig.3 is shown by a dotted line). For fastening it in the cabin of a vehicle one can also use other means, for example, the clamp (not shown in the Figs.).

In the body 1 and the container 14 the elements ensuring a capability of hooking up the receiver-indicator to the unit 16 in the course of operation of the receiver-indicator within the container 14 are located. These elements are represented by the two-pin plug of power supply 19, the pins 20 which are submerged in a groove 21 of the lower end parts of the body 1 (Fig.1), and outstanding socket of a power supply 22 with mating jacks 23, located at the bottom of the container 14 (Fig. 2), ensuring interaction and electrical contact of pins 20 of two-pin plug 19 and jacks 23 of socket 22 in the course of operation of the receiver-indicator within the container (Fig.3). The socket 22 and the connector 17 in the container 14 are electrically connected to the appropriate terminals of the unit 16.

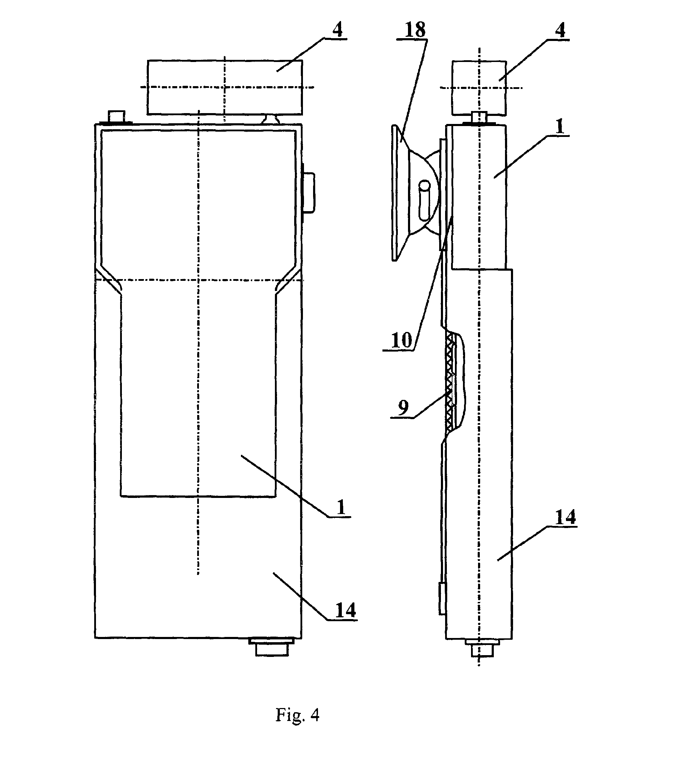

At the bottom of container 14 the ledge 24 is made, having the cylindrical shape and ensuring a capability of accommodation of pins 20 of the two-pin plug 19, and at the bottom of the body 1 of the receiver-indicator an additional groove 25, ensuring a capability of accommodation of a socket 22 in the storage mode of the receiver-indicator in the container 14 (Fig.4), is made, with capability of rotation of the body 1 of the receiver-indicator on 180° concerning the centerline 6 in relation to the position occupied by the body of the receiver-indicator in the operating mode within the container (Fig.3).

It is as a matter of convenience for the placing the parts of the body of the receiver-indicator in the container 14 that the parts to be placed in the container 14, are narrowed down in relation to a part of the body remaining outside the container 14, thus the cross-sectional sizes of the container 14 do not exceed the limits of the cross-sectional sizes of the body 1, remaining outside of the container 14 when the receiver-indicator is within the container 14 (Figs.3 and 4).

For the convenience of carrying and hand holding, the container 14 is supplied with an elastic belt 26 fixed on the back side of the container (Fig. 2). The operation of the receiver-indicator onboard a vehicle, for example in the cabin of an automobile, is arranged in the following manner. The container 14 is fixed, with the help of a vacuum sucker 18 comprising a ball joint, in the cabin of an automobile in a place, convenient for operation of the receiver-indicator The cable of an external (onboard) power supply is connected to the jack 17 of the container 14. The receiver-indicator is placed into the container so that the keypad 9 and indicator 10 are looking outwards (Fig.3). Thus pins 20 of the two-pin plug 19 enter the pin-holes 23 of the socket 22 and the onboard electric power is provided through the unit 16 ( voltage regulator of an external power supply, i. e. the charger of the rechargeable batteries 11) to the receiver-indicator. The external antenna is connected to jack 13. The built-in antenna 4 of the receiver-indicator is deployed, in such a case, in the storage mode.

The operation of the receiver-indicator outside of a vehicle is possible either within the container 14, or without the container. In the first case, an external power supply may be used with the help appropriate cable attached to the connector. In the second case, a power supply from own rechargeable batteries 11 is used. The operation of the receiver-indicator outside a vehicle is implemented either with the own antenna 4, or with an additional external antenna connected to the jack 13 through the appropriate cables. In operation with own antenna 4, the antenna is rotated on hinge 2 to be placed in the position of both the best signal reception and, at the same time, of better convenience for the access to the keypad 9 and indicator 10. As a rule, it corresponds to vertical orientation of a centerline 7 of the antenna 4 and the arrangement of the centerline 6 of the body 1 at the angle from 20° to 30° to horizon. In this position, the cross-sectional axis 5 of the antenna 4 and cross-sectional axis 8 of the body 1 are placed in perpendicular directions. The operating position of the antenna 4 in operation of the receiver-indicator within the container 14 is shown on Fig. 3 by dotted line.

In the storage mode of the receiver-indicator the antenna 4 is turned on a hinge 2 so, that the cross-sectional axis 5 of the antenna 4 is parallel to a centerline 6 of the body 1, and the centerline 7 of the antenna is parallel to a cross-sectional axis 8 of the body 1. At such position of the antenna 4 the receiver-indicator can be stored both in a pocket of clothing, and in the container 14 (Fig. 4).

In the of storage mode of the receiver-indicator in the container 14 (Fig. 4) its body 1 is turned around of a centerline on 180° in relation to an operating position (Fig. 3), whereas the socket 22 of the container 14 (Fig. 2) is placed in a groove 25 of the body 1 (Fig. 1), and pins 20 of the two-pin plug 19 (Fig. 1) are placed in the cylindrical cavity 24 of the container 14 (Fig. 2). At such arrangement of the receiver-indicator in the container 14 the keypads 9 and the indicator 10 are turned to face the wall of the container 14, which protects them from damages. At such arrangement of the receiver-indicator in the container 14 its connection with the unit 16 is broken.

Thus, the combination of design features in question allows the claimed portable receiver-indicator of satellite radio navigational systems to achieve the necessary result, i. e. to ensure the capability of safe storage of the receiver-indicator in the container, to ensure the capability of operation of the receiver-indicator both within the container, and outside of it to ensure the capability of operation within the container both with a power supply from own batteries, and from an external power source.

Thus, the problem of creating a SRNS receiver-indicator universal in application, convenient in use and intended for mass consumer is solved.

## Claims

1. Portable receiver-indicator of satellite radio navigational systems containing body, stretched in a longitudinal direction and made in the shape of a parallelepiped, with antenna located at the top of the body, the controls and display located on the front side, with the interface connector for data transmission and connector for hook up of the external antenna also located on the body, and also power source - the unit of rechargeable batteries, located inside the body, ***characterized in*** that the receiver-indicator is equipped with the container for accommodation of the receiver-indicator, made for the safe storage of the receiver-indicator in the storage mode, and, in an operational mode within the container, for operation with a power supply from an external power source through a voltage regulator of an external power supply - charger of rechargeable batteries, thus the storage mode is characterized by turn of a body of the receiver-indicator on 180° around of the centerline in relation to the position of the receiver-indicator in operation within the container.

2. Portable receiver-indicator as in claim 1 ***characterized in*** that the antenna is made in the shape of a parallelepiped, its length does not exceed the width of the body of the receiver-indicator, the antenna is fixed on a body of the receiver-indicator with a capability of being turned in such a manner that in the storage mode the cross-sectional antenna axis is parallel to a centerline of the body of the receiver-indicator, the centerline of the antenna is parallel to the cross-sectional axis of the body of the receiver-indicator, and in an operating mode the position of the cross-sectional antenna axes and that of the body of the receiver-indicator are placed in perpendicular directions, the centerline of the antenna is directed vertically upwards, and the centerline of the body is directed at an angle to the horizon.

3. Portable receiver-indicator of claim 2 ***characterized in*** that the antenna is fixed on the top surface of the body of the receiver-indicator with the help of a rotary device comprising a spherical hinge, through which the internal interconnect cable goes.

4. Portable receiver-indicator of claim 1 ***characterized in*** that the container for accommodation of the receiver-indicator is made in the shape of a box, with the completely opened upper end part suitable for placing the receiver-indicatora in the container, and fractionally opened upper front part for easy access to the display and controls in the course of operation of the receiver-indicator within the container, thus the voltage regulator of an external power supply, i. e. the charger of rechargeable batteries, is located in a compartment provided in a bottom of the container, and is connected, electrically, to the connector for hook up to the external power source.

5. Portable receiver-indicator of claim 1 ***characterized in*** that the part of the body of the receiver-indicator, to be placed in the container, is narrowed down in relation to a part of the body staying outside of the container, thus the cross-sectional sizes of the container do not exceed the cross-sectional dimensions of the body of the receiver-indicator, staying outside the container in its accommodation within the container.

6. Portable receiver-indicator as in claim 1 ***characterized in*** that the receiver-indicator and the container are supplied with elements ensuring the electrical connection of the receiver-indicator with a voltage regulator of an external power supply - by a charger of batteries, in the course of operation within the container, the elements being the two-pin plug of a power supply, which pins submerged in a groove of the lower end part of the body of the receiver-indicator, and outstanding socket of a power supply with mating jacks located at the bottom of the container, ensuring interaction and electrical contact of the two-pin plug and pin holes of a socket in the course of operation of the receiver-indicator within the container, thus the pin holes of the socket are connected electrically to the appropriate terminals of a voltage regulator of an external power supply - charger of batteries, in the container.

7. Portable receiver-indicator of claim 1 ***characterized in*** that at the bottom of container there is the ledge in the shape of a cylinder for accommodation of pins of the two-pins plug of a power supply of the receiver-indicator, and at the bottom of the body of the receiver-indicator there is a groove for accommodation of the socket of a power supply of the container in the storage mode of the receiver-indicator within the container.

8. Portable receiver-indicator of claim 1 ***characterized in*** that the container is supplied with a belt for carrying and holding it in hand.

9. Portable receiver-indicator of claim 1 ***characterized in*** that the container is supplied with a means for fastening it in the cabin of a vehicle.

10. Portable receiver-indicator of claim 9 ***characterized in*** that removable vacuum "sucker" with a ball joint is used as a means for fastening the container within the cabin of a vehicle.
